Europäisches Patentamt

European Patent Office

Office européen des brevets

(19)

(11) Publication number: 0 080 262
A1

(12) EUROPEAN PATENT APPLICATION

(21) Application number: 82305433.3

(22) Date of filing: 13.10.82

(51) Int. Cl.³: B 62 D 7/18, F 16 C 11/06

(30) Priority: 21.10.81 GB 8131731

(43) Date of publication of application: 01.06.83
Bulletin 83/22

(84) Designated Contracting States: BE DE FR GB IT SE

(71) Applicant: AUTOMOTIVE PRODUCTS PUBLIC LIMITED
COMPANY, Tachbrook Road, Leamington Spa
Warwickshire CV31 3ER (GB)

(72) Inventor: Stott, Alan Vernon, 47 Hay Lane, Monkspath
Solihull West Midlands (GB)
Inventor: Lidstone, Paul Frederick, Shrieves House
Sheriffs Lench, Evesham Worcs (GB)

(74) Representative: Farrow, Robert Michael, Patent
Department Automotive Products plc Tachbrook Road,
Leamington Spa Warwickshire CV31 3ER (GB)

(54) Ball and socket joints.

(57) A ball and socket joint particularly for use as a steering rack end joint which comprises a ball pin (16) the ball of which is located in a cup shaped bearing (15) housed in a socket (10). The socket comprises a tubular housing (21) and a screw head (11) and the tubular housing has an internal shoulder (19) for abutment with the screw head (11). The bearing cup (15) is trapped between tubular housing (21) and the screw head and dimensioned so as to exert a control load on the ball (17), the shoulder (19) preventing assembly loads being applied to the bearing cup (15).

## "BALL AND SOCKET JOINTS"

This invention relates to ball and socket joints, e.g. for motor vehicle steering linkages.

A known ball and socket joint comprises a cup-shaped socket formed from a tubular member, a bearing cup located in the socket and a ball pin, the ball of which is mounted for rotation in the bearing cup and the shank of which extends through the mouth of the socket, and the base of the socket is formed by a screw head. Such a joint will hereinafter be called a joint of the kind referred to and an example is shown in GB 1 344 878.

In the above patent specification the tubular socket is pressed onto the screw head to compressively load the bearing cup therebetween to a predetermined degree, and the tubular socket is then swaged over the screw head to lock the socket in position on the screw head. The preload bearing establishes a desired torque resistance for movement of the ball in the bearing cup.

0080262

In this illustrated joint the torque load is applied to the joint during assembly of the socket onto the screw head and the only control to the amount of preload on the ball is that applied by assembly apparatus, i.e. the assembly machines are set to exert a controlled load on the bearing during assembly of the joint.

The present invention provides a joint of the kind referred in which the bearing cup exerts a preload on the ball and in which any preload is not directly applied by loading the bearing cup between the socket housing and the screw head.

Accordingly there is provided a ball and socket joint of the kind referred characterised in that the tubular socket member has an internal shoulder for abutment with the screw head, and an end portion which is deformed around the screw head to lock the screw head between the shoulder and said end portion.

An advantage of this type of construction is that the ball of the ball pin can be matched with a given cavity size in the bearing cup to achieve the desired torque load on the ball. The internal shoulder on the tubular member then prevents any assembly load being exerted on the bearing cup when the end portion of the tubular member is deformed around the screw head. This ensures that the torque loads exerted by the selected bearing cup on the ball are more predictable.

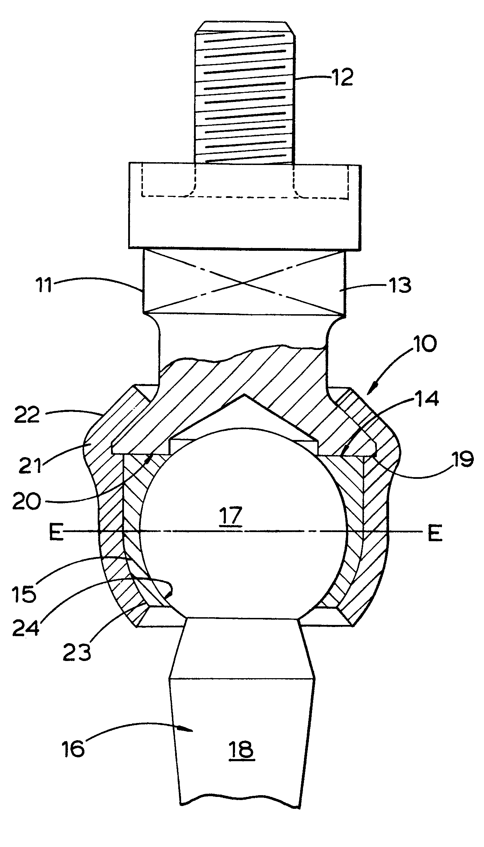

The invention will be described by way of example and with reference to the accompanying drawing which is a longitudinal section through a motor vehicle steering rack end joint.

The joint has a screw head 11 having a threaded stud 12 thereon for attachment to a vehicle steering rack (not shown). An alternative connection with the steering rack would be a screw threaded cavity. The external surface of the screw head 11 has flats 13 thereon for the application of a spanner when screwing the joint onto a rack. The screw head 11 has an end face 14 thereon which provides a seat for a bearing cup 15.

The ball pin 16 has a ball 17 and a shank 18. The ball 17 is mounted for rotation in the bearing cup 15 which supports the ball on both sides of its equator E-E, and the shank 18 extends through the mouth of the cup. The bearing cup 15 is illustrated as a one piece snap over bearing moulded from Nylon 6, 66, or acetal resin, or alternatively could possibly be made from a two part cup. The bearing cup 15 is located in a cup shaped socket 10 formed from a screw head 11 and a tubular housing 21 having a spherically shaped mouth 23 which co-operates with a like surface on the exterior of the bearing cup to retain it in the surround. The shank 18 projects through the mouth 23 of the surround and the other end portion 22 of the housing 21 has an internal shoulder which is level with the bottom face 20 on the base of the bearing cup 18. The shoulder 19 and bottom face 20 present a continuous face when the ball pin and cup 15 are assembled in the tubular housing 21. The end face 14 of the screw head 11 abuts the so formed continuous face to hold the bearing cup in place and the end portion 22 is deformed around the screw head to clinch the shoulder 19 hard against the end face 14.

The torque control load exerted on the ball 17 of the ball pin is due to the match between the size of the bearing cup 15, the ball 17, and the tubular housing 21. The bearing cup 15 is made slightly oversize for the defined space between the housing and ball in which it is to be located so as to exert the desired control load on the ball. The shoulder 19 prevents any compressive loads from being applied to the bearing cup 15 when the housing 21 is fitted over the screw head 11 and therefore the torque control load on the ball 17 is not governed by assembly process parameters.

Claims

1.        A ball and socket joint having a cup shaped socket (10) formed from a tubular member (21), a bearing cup (15) located in the socket (10) and a ball pin (16), the ball (17) of which is mounted for rotation in the bearing cup (15) and the shank (18) of which extends through the mouth (23) of the socket (10) and the base of the socket (10) is formed by a screw head (11), characterised in that the wall of the tubular member (21) has an internal shoulder (19) for abutment with the screw head (11) and an end portion (22) which is deformed around the screw head (11) to lock the screw head (11) between the shoulder (19) and said end portion (22).

2.        A joint as claimed in Claim 1, characterised in that the bearing cup (15) is a one piece cup supporting the ball (17) on both sides of an equator E-E thereof.

0080262

European Patent Office

**EUROPEAN SEARCH REPORT**

Application number

EP 82 30 5433

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | B 62 D 7/18 |
| X | FR-A-2 444 192 (J. PERRIER)<br>* page 1, lines 1 to 28; page 3, line 19 to page 5, line 23; page 6, lines 2 to 6; figure 1 * | 1,2 | F 16 C 11/06 |
| | --- | | |
| A | FR-A-2 432 645 (J. PERRIER)<br>* page 5, lines 8 to 17; figure 4 * | 1 | |
| | --- | | |
| A,D | GB-A-1 344 878 (TRW INC.)<br>* page 2, line 1 to page 3, line 57; figures 2, 3 * | 1 | |
| | --- | | |
| A | DE-A-2 214 577 (CAM GEARS LTD.)<br><br>* page 6, lines 4 to 29; figure * | | |
| | ----- | | |

TECHNICAL FIELDS SEARCHED (Int. Cl. ³)

B 62 D 7/00
F 16 C 11/00

The present search report has been drawn up for all claims

| Place of search<br>BERLIN | Date of completion of the search<br>06-01-1983 | Examiner<br>PETTI P |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82